# EUROPEAN PATENT SPECIFICATION

(11) **EP 1 547 498 B1**
(45) Date of publication and mention of the grant of the patent: **02.04.2008**
(21) Application number: 03029686.7
(22) Date of filing: 23.12.2003
(51) Int. Cl.: A47J 31/06

(54) **Cabinet design of filter holder for pressurized coffee machines**
Filterhalterschublade für Espresso-Kaffeemaschinen
Tiroir porte-filtre pour cafetière espresso

(43) Date of publication of application: 29.06.2005
(73) Proprietor: Electrical & Electronics Limited, Tai Po, Hong Kong (CN)
(72) Inventor: Chen, Andrew Yuen Chin 12/F, Block 3, Tai Ping, Hong Kong (CN); Poon, Sum Fat 12/F, Block 3, Tai Ping, Hong Kong (CN)
(74) Representative: Capasso, Olga

(56) References cited:
- EP-A- 0 555 775
- EP-A- 0 838 185
- DE-A- 19 647 039
- GB-A- 811 979
- US-A- 1 750 068
- US-A- 5 649 472
- US-A1- 2002 121 198

## Description

### FIELD OF THE INVENTION

The present invention relates to the design of a brewing head unit of a coffee machine comprising locking means for detachable attachment of a cabinet- or drawer-like filter holder to the brewing head unit of the coffee machine.

### BACKGROUND OF THE INVENTION

Throughout this application, various references are referred to. Disclosures of these publications in their entireties are hereby incorporated by reference into this application to more fully describe the state of the art to which this invention pertains.

The locking mechanisms employed or used by most existing pump espresso or steam espresso machines are not very user friendly. It is very cumbersome for the user to locate and attach the filter holder unit into the locking mechanism on the brewing head unit of a coffee machine. As a rule, the filter holder units which have so far been in common use for espresso machines have a brewing tray which is provided with a radially projecting handle and has inserted thereinto a pot-shaped filter insert. See U.S. Pat. No. 5,913,962. With such design, the user would need to put the coffee ground into the stainless steel filter then place or insert the filter into the filter holder. Next, the user would need to find the fitting slot on the brewing head unit, attach the filter unit to the brewing head unit, and turn the filter unit to lock the filter unit onto the brewing head unit. Frequently, the user spends a lot of time attempting to locate the locking position on the brewing head unit.

U.S. Patent No. 6,490,966 relates to a device for extracting the contents in a capsule consisting of two independent and identical clamping elements, enclosing a housing for the capsule.

German Application No. DE 196 47 039 to Darboven discloses a coffee machine with a brew head having a sliding filter assembly and a swivel-to-lock assembly. The sliding movement of the filter assembly can be optionally operated by a motor. However, Darboven fails to disclose a sealing assembly comprising a seal ring, water connection plate, water outlet valve, water outlet spring, water spreader, and water outlet valve holder.

U.S. Application Publication No. 2002/0121198 to Kollep, et al. discloses an extraction device having a rotate-to-lock assembly, whereby said device may be attached to a conventional tank, heating element, and pump of a coffee-making machine. However, Kollep, et al. fails to disclose a sliding filter holder assembly and a sealing assembly comprising a seal ring, water connection plate, water outlet valve, water outlet spring, water spreader, and water outlet valve holder.

Moreover, traditional pump espresso and steam espresso machine uses either a boiler or a thermal block heating system which is mounted on top of the brewing head or shower and locking mechanism. With this design, the hot water from the heating system would flow directly to the filter.

The drawback to the previous designs of mounting the boiler or the thermal block heating system on the brewing head unit is that the placement of the locking mechanism is limited by this design. The limitations/drawbacks of the placing the heating system on top of the brewing head unit include:
1. The weight of the heating system on the top will increase the force required to open the brewing head, which is not user friendly.
2. When the heating system is fixed on top of the brewing head unit, it creates a constraint on the design of the locking mechanism. In the present invention, the filter holder (movable part) is placed on the bottom. Also, in the present invention, the movable part is on the top and the fixed part is located on the bottom, so the user can slide in or swing in the filter holder unit into the brewing head unit visually.

The present invention relates to a simpler mechanism for locking the filter holder comprising pivotable upper brewing head section and a lower brewing head section fixedly attached to the brewing head unit. The said lower brewing head section comprises a housing which can be adapted to receive various types filter holders and/or capsules.

The present invention further relates to the design of a brewing head unit of a coffee machine which has a cabinet filter holder and a boiler or heating system which is not placed on the top of the brew head unit. Another aspect of the invention, the boiler or the heating system as described above is separated from the brewing head unit. In a further aspect of the invention, the boiler or the heating system can be placed side by side with the brewing head locking mechanism.

The boiler and brew head of the invention are operatively connected by a Teflon hose. The primary advantages of having a boiler or heating system which is separate from the brewing heat unit is that the brew head unit does not have to carry the weight of the boiler so that the design of the locking mechanism is more flexible, versatile and/or dynamic.

It is another object of the present invention to take away from the user all the hassles of inserting the filter holder into the brewing head unit. The present invention relates to a new design which uses easy to fit cabinet design to act as the filter holder. The user has a very simple task to perform, namely to fit the filter into the filter holder visually. There is no longer any need for the user to search blindly for the locking position. This cabinet design concept can be applied to all types of pressurized espresso machines. There are at least 5 ways to place the cabinets into the machines and they can be performed as follows:
1. Slide the cabinet filter holder into the brewing head unit from the front;
2. Slide the cabinet filter holder into the brewing head unit from the sides;
3. Slide the cabinet filter holder into the brewing head unit from the rear;
4. Swing the cabinet filter holder in or out about a pivot fixed to the brewing head unit; or
5. Insert the cabinet filter holder into the brewing head unit from the top.

In another aspect of the invention, a motor is used to operate the locking mechanism and the cabinet filter holder without any manual intervention so that the entire movement of the cabinet filter holder unit would require less effort and be more convenient for the user. In a further aspect of the invention, the movement of the cabinet is provided by a motor which is operated by a remote control.

Table 1 below summarizes the key differences between the filter holder mechanism according to the existing state of the art and claimed cabinet filter holder of the present invention.

**TABLE 1. DIFFERENCES BETWEEN THE FILTER HOLDER MECHANISM ACCORDING TO THE EXISTING STATE OF THE ART AND CLAIMED CABINET FILTER HOLDER**

| | **Existing pressurized filter holder mechanism** | **Cabinet filter holder mechanism** |
|---|---|---|
| Boiler or thermal block | It needs to be on top of the brew head and above the filter holder | The boiler or thermal block does not have to be on the top of the brew head. It can even be placed side by side with the locking mechanism. |
| Filter holder fitting | The user would first need to search it blindly and then would need to lock the holder in place by turning it from left to right or right to left. | The new cabinet can be slide in from the front, side or rear, or swing out or inserted from the top. The movement of the cabinet can be automated by a motor to drive/control the movement. The said motor can be operated by remote control. |
| Way to place of the filter holder in place | Search blindly | Direct/immediately visible |
| Locking method | Lock by swing fit of the filter holder. | Rotate to Lock system |

The foregoing objects and advantages of the present invention are illustrative of those that can be achieved by the present invention and are not intended to be exhaustive or limiting of the possible advantages which can be realized. Thus, these and other objects and advantages of the invention will be apparent from the description herein or can be learned from practicing the invention, both as embodied herein or as modified in view of any variation which may be apparent to those skilled in the art. Accordingly, the present invention resides in the novel methods, arrangements, combinations and improvements herein shown and described.

### SUMMARY OF THE INVENTION

It is an object of the invention a brewing head unit of a coffee machine, comprising:
- a sliding filter holder assembly;
- a sealing assembly, comprising a water connection plate (2), water outlet valve (3), seal ring (4), water outlet spring (5), water spreader (6), and water outlet valve holder (7); and
- a rotate-to-lock assembly, operatively linked to sustain pressures of at least 20 bars.
   Preferably, the sliding filter holder assembly comprises a filter (15), filter handle (16), filter holder (17), and coffee chamber (18).
   More preferably, the sliding filter holder assembly comprises a flange to provide linear sliding movement of the sliding filter holder assembly relative to the brewing head unit, wherein said linear sliding movement is driven by a motor and operated by a remote control.
   Preferably, the rotate-to-lock assembly comprises a top frame (1), back connection plate (8), front connection plate (9), fix pin (13), rotate rod (10), rotate plate (11), support base (14), and handle (12).
   Even preferably, the rotate-to-lock assembly comprises a top frame (1), connection plate (3a), cam pin (11a), hinge pin (2a), support base (14), and handle (10a).
   Still preferably,
- the sliding filter holder assembly is part of a filter holder section ada.pted to receive a filter and a brewing chamber with exit openings;
- the brewing head unit further comprises a lower brewing head section fixedly attached to said machine comprising a recess or receptacle adapted to receive said filter holder section, and
- an upper brewing head section comprising a seal member, an inlet for hot fluid, and a spreader in communication with said inlet for distributing the hot fluid to said filter holder section or coffee/brewing chamber,
   said upper brewing head section being pivotable relative to said lower brewing head part to a closed position in which said seal member form a pressure- and water-tight seal between said upper brewing head section and said filter holder section, and to an opened position to unlock the filter holder section from said lower brewing head section.

Yet preferably, said filter holder section is inserted, mounted or placed vertically from above into the receptacle or recess of the lower brewing head section, or wherein said filter holder section is inserted or mounted horizontally from the side into the receptacle or recess of the lower brewing head section.

Still preferably, said upper brewing head section is pivotable relative to said lower brewing head section by an inclination angle of up to about 55° when in the open position, and wherein said seal member is capable of sustaining pressures of at least 20 bars when the upper brewing head section and the lower brewing head section are in the closed position.

In another embodiment the brewing head unit further comprises a lock for maintaining the water- and pressure-tight seal between said upper brewing head section and said filter holder section, or wherein said lower brewing head section comprises a housing opened at its front to form a cavity and said filter holder section comprises a cabinet adapted to receive a filter and a brewing chamber and a sliding unit provided at a movable junction of the housing and the cabinet for allowing a linear sliding movement of the cabinet relative to the housing, or wherein said sliding unit is motor-driven allowing automatic linear sliding movement of the said cabinet relative to the said housing, or wherein the motor-driven sliding unit is operated by remote control.

Preferably, the brewing head unit further comprises a generator for producing hot liquid fluid, hot gaseous fluid, or pressurized hot fluid.

It is another object of the invention a pressurized coffee machine, comprising a brewing head unit of as described above, further comprising a generator, a boiler, or a heating system for producing hot fluid, wherein said generator, boiler, or heating system is connected to said brewing head unit by a hose.

### DETAILED DESCRIPTION OF THE FIGURES

The invention relates to the sliding (in/out) filter holder and the 2 to locking mechanism.

The accompanying drawing illustrates diagrammatically non-limitative embodiment of the invention as follows:

One embodiment of this invention, hereinafter referred to as Construction I, is shown in Figure 1 to Figure 5
Figure 1 is a cross-sectional illustration of the brewing head assembly/unit of Construction I in the closed position.
Figure 2 is a cross-sectional illustration of the brewing head assembly/unit of Construction I in the opened position.
Figure 3 is an explode view of the rotate to lock assembly, sealing assembly, slide filter holder assembly and the separated boiler and hose of Construction I.
Figure 4 is isometric view of the brewing head assembly/unit of Construction I in the opened position.
Figure 5 is isometric view of the brewing head assembly/unit of Construction I in the closed position.

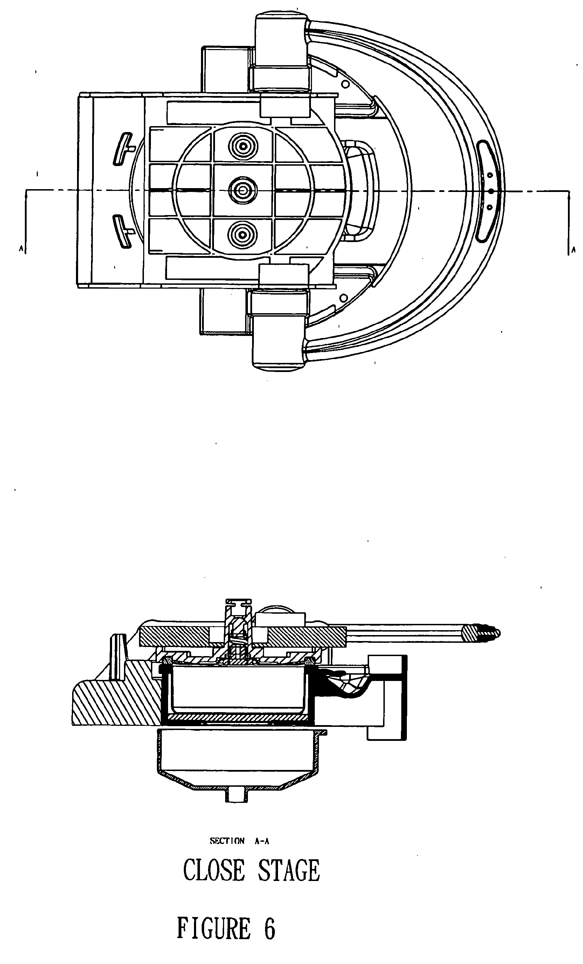

Another embodiment of this invention, hereinafter referred to as Construction II, is shown in Figure 6 to Figure 10.
Figure 6 is a cross-sectional illustration of the brewing head assembly/unit of Construction II in the closed position.

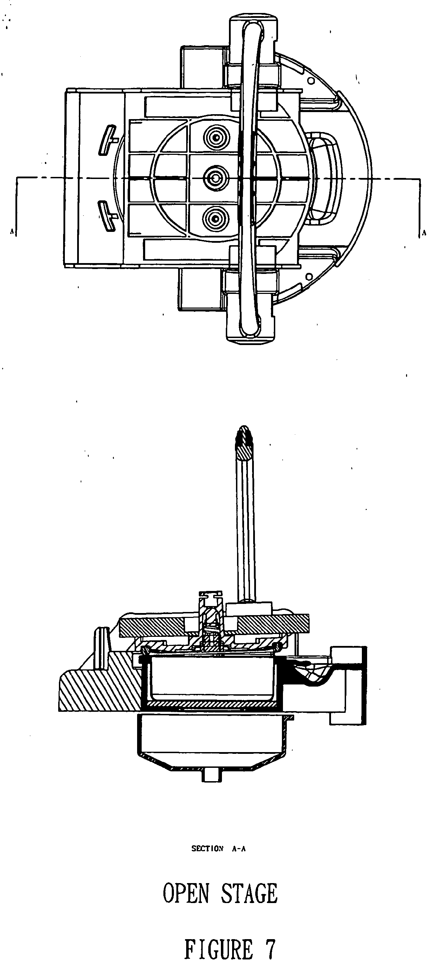

Figure 7 is a cross-sectional illustration of the brewing head assembly/unit of Construction II in the opened position.

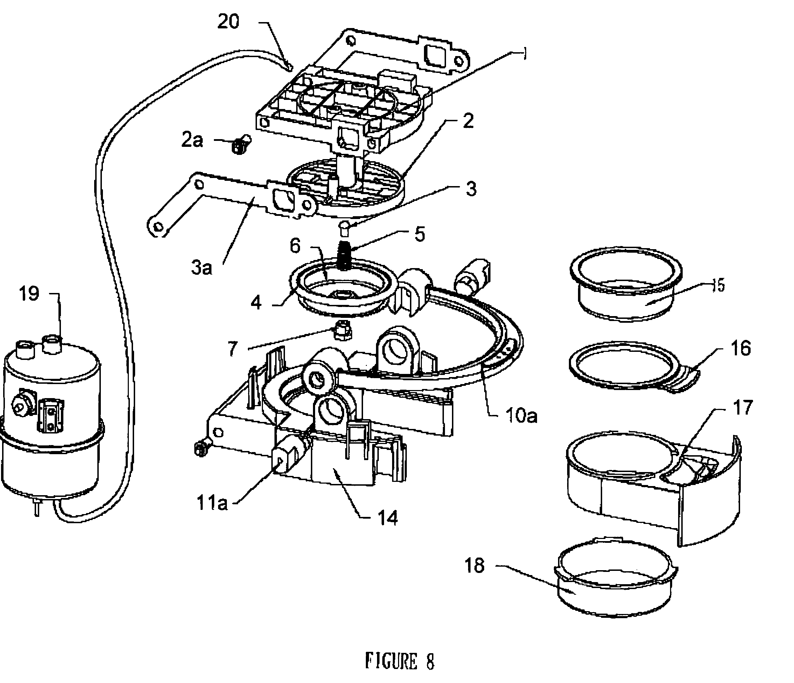

Figure 8 is an explode view of the rotate to lock assembly, sealing assembly, slide filter holder assembly and the separated boiler and hose of Construction II.

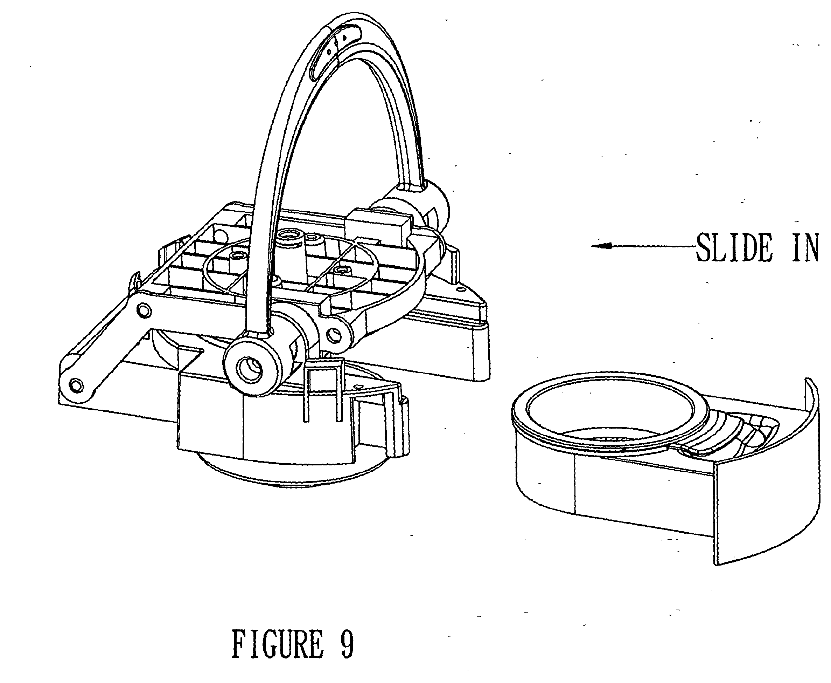

Figure 9 is isometric view of the brewing head assembly/unit of Construction II in the opened position.

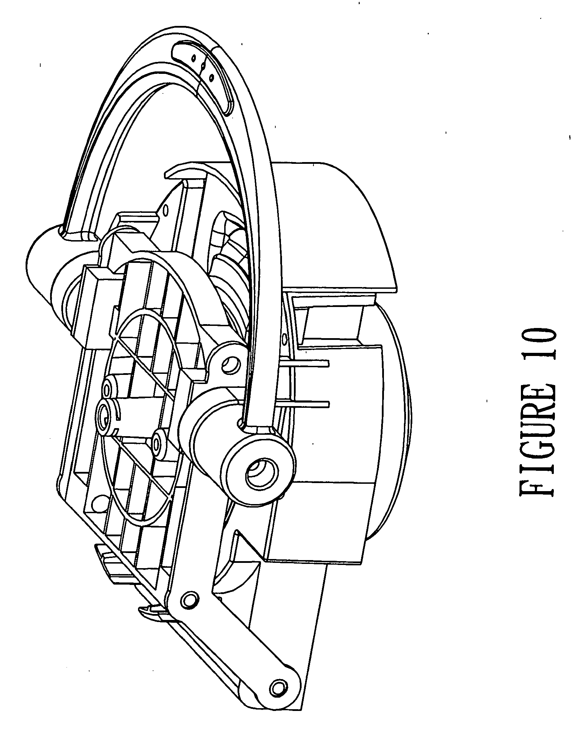

Figure 10 is isometric view of the brewing head assembly/unit of Construction II in the closed position.

### DETAILED DESCRIPTION OF THE INVENTION

It is the object of this invention to provide a cabinet design of the filter holder. This invention provides a boiler/heating system which is separate from the brewing head unit of the coffee machine and a locking mechanism.

This invention provides a locking mechanism which is advantageous over prior art in that the filter holder unit does not need to be turned for it to lock. We only need slide in the filter holder and rotate down the handle. It is easier to operate and more efficient than the traditional turning lock mechanism.

### Rotate to Lock Assembly of Construction I

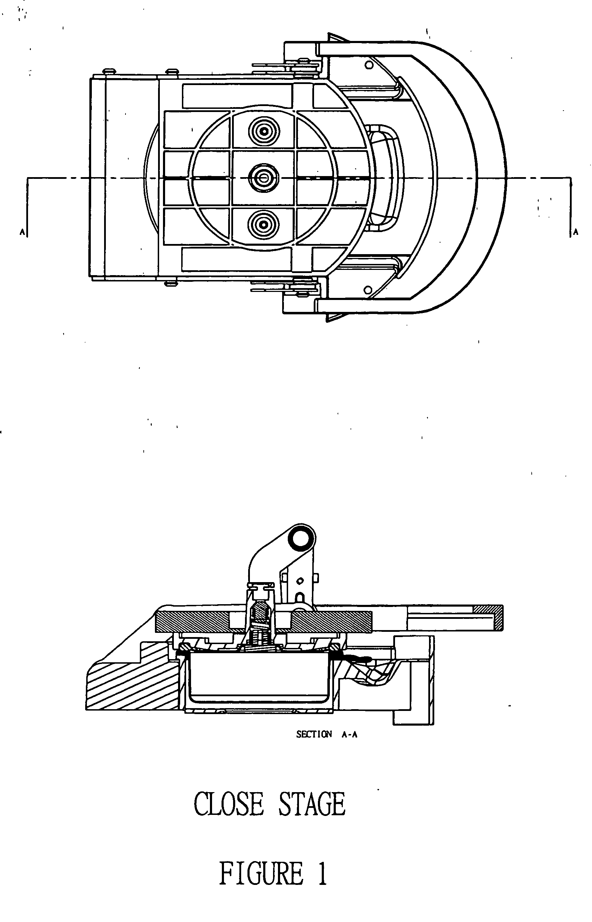

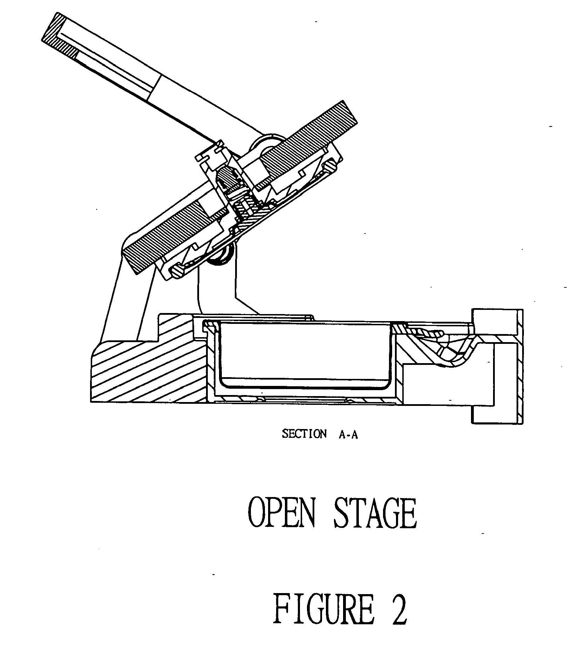

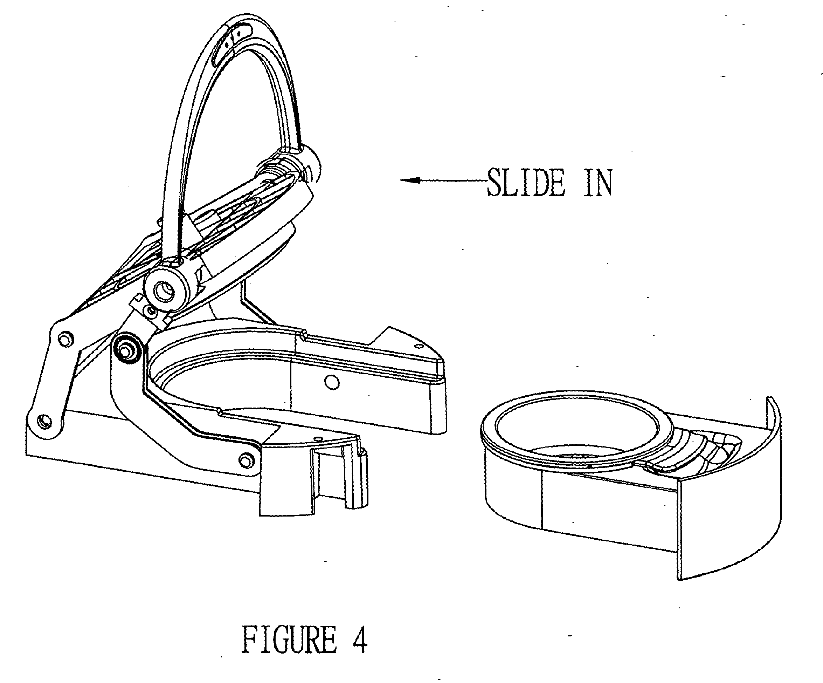

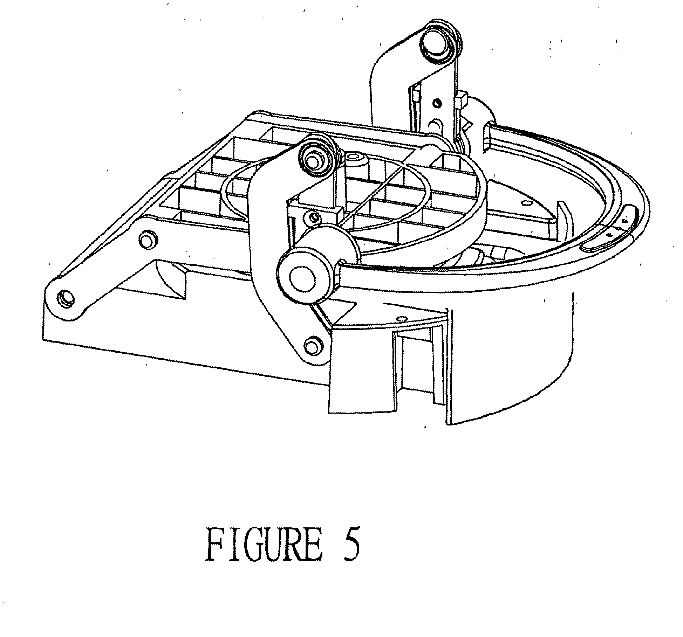

This invention provides a brewing head assembly/unit (See Figure 1-5) of a coffee maker comprising: a rotate to lock assembly, a sealing assembly and a filter holder assembly/unit, operatively linked to sustain pressure of at least 20 bars.

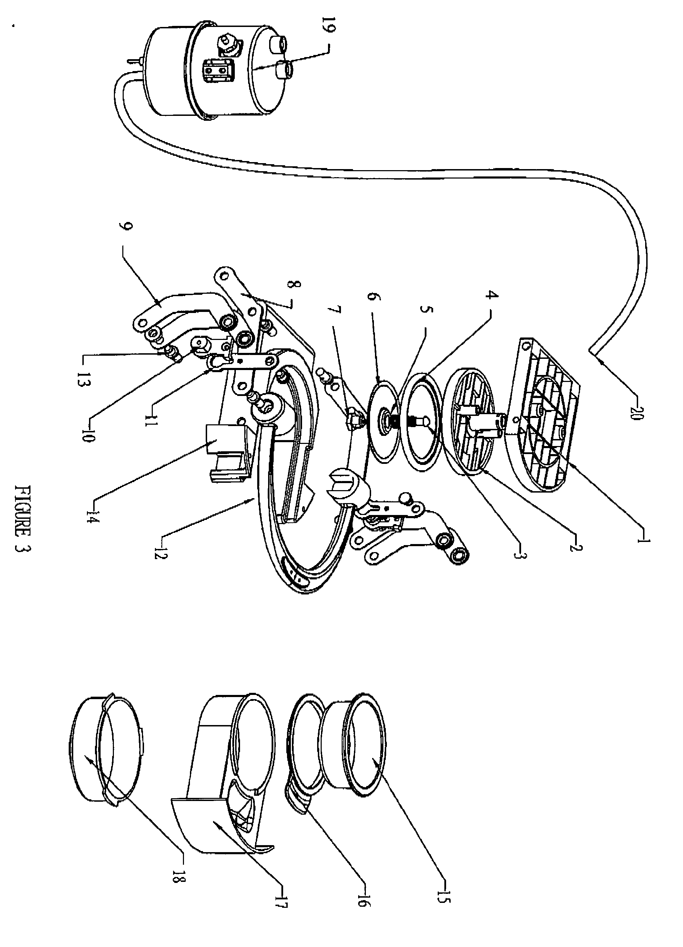

This invention provides a rotate to lock assembly comprising handle, top frame, back connecting plate, front connecting plate, fix pin, rotate rod, rotate plate and support base. In an embodiment, the rotate to lock assembly is as set forth in Figure 3.

This invention provides a sealing assembly comprising a Seal ring, water connection plate, water outlet valve, water outlet spring, water spreader, and water outlet valve holder. In an embodiment, the sealing assembly is set forth in Figure
3.

This invention provides a filter holder assembly/unit comprising a filter, filter handle, filter holder and coffee chamber. In an embodiment, the filter holder assembly is set forth in figure 3.

The operation of the locking mechanism of an aspect of the invention of construction I, are as follows:

To prevent the leakage of water, the silicone rubber seal ring is used on the brew head. The silicone rubber seal ring is fixed between the water connection plate and water spreader by the water outlet valve holder.

To operate the lock, the handle rotates backward, the rotate rod and the rotate plate, which are operative linked, move from the upright position backwards to an inclined position. The opening angle of the brew head is about 45° to 55° . After opening the brewing head assembly/unit, the filter holder can be slide into or pulled out of the support base.

To close and/or lock the brewing head assembly/unit, the handle is moved forwards. The rotate pin, rotate plate and front connection plate move upright, and the brew head is lock. Once locked, the silicone rubber seal ring sits on the filter. The brewing head unit in the locked position will make the seal ring deform on the filter. This deformation creates a seals to prevent water from leaking from the flange of the filter.

The upright position of the rod plate, rod pin and the front connection plate can sustain at least 20 bars of pressure exerted on the filter so it will not leak when at least 20 bars of pressure is applied. At last, the coffee machine can start to brew coffee.

Figure 3 shows the exploded view of one aspect of the invention to show the components of the rotate to lock assembly (construction I), sealing assembly and filter holder assembly.

As shown in Figure 3, the metal handle **12** rotate upward for un-locking the brewing head assembly/unit. The handle is linked to the rotate plate **11,** rotate rod **10,** front connection plate **9** and the back connection plate **8** by a fix pin **13.** All the parts move until the front connection plate is in the horizontal position. The top frame **1** will make an inclination angle of between about 45° - 55° to the support base **14** when the brewing head unit is in the opened position.

The sealing assembly is composed of the top frame **1**, water connection plate **2**, seal ring **4**, water outlet valve **3**, water outlet spring **5**, water spreader **6** and the water outlet valve holder **7**. The water outlet valve holder **7** is the nut which holds the water spreader **7**, water outlet spring **5**, seal ring **4**, and the water outlet valve **3** to the water connection plate **2**. Then the sealing assembly is fixed to the top frame **1** by a screw. A water outlet valve **3** and water outlet spring **5** is used to prevent water or fluid from flowing out from the water spreader to the coffee under low pressure during the water heating stage. Hot water is released when the pump pressure is greater than the water outlet spring, which is around 5 Bar. When hot water makes contact with the coffee, the pump pressure will increase to at least 10 to 20 bars. Then the coffee will flow out to the cup.

To brew coffee, the filter holder assembly/unit needs to slide into the brewing head unit. The filter holder assembly/unit is comprised of the metal filter **15**, filter handle **16**, filter holder **17** and coffee chamber **18**. The coffee is placed into the coffee filter, and then the filter holder is inserted into the filter holder. The coffee chamber **18** collects the coffee and then flow to the cup.

### Rotate to Lock Assembly Construction II

This invention provides a brewing head assembly/unit (See Figure 6-10) of a coffee maker comprising: a rotate to lock assembly, a sealing assembly and filter holder assembly, operatively linked to sustain pressure of at least 20 bars.

This invention provides a rotate to lock assembly comprising handle, top frame, connecting plate, hinge pin, cam pin and support base. In an embodiment, the rotate to lock assembly is as set forth in Figure 8.

This invention provides a sealing assembly comprising a seal ring, water connection plate, water outlet valve, water outlet spring, water spreader, and water outlet valve holder. In an embodiment, the sealing assembly is set forth in Figure 8.

This invention provides a filter holder assembly/unit comprising a filter, filter handle, filter holder and coffee chamber. In an embodiment, the filter holder assembly/unit is set forth in figure 8.

The operation of the locking mechanism of another aspect of the invention, construction II, is as follows:

To prevent the leakage of water from the brewing head, the silicone rubber seal ring is used on the brewing head unit. The silicone rubber seal is fixed between the water connection plate and water spreader by the water outlet valve holder.

To operate the rotate to lock assembly, the handle is rotated upwards until the handle is 90 degrees with the horizontal (See Figure 9). The cam pin is linked to the handle. When the cam pin rotates, it causes the connection plate to rise up. The connection plate is linked to the top frame by the hinge pin. The clamp force on the filter holder is released. Once the brewing head assembly/unit is in the opened position, the user can insert/slide-in the filter holder assembly/unit or pull out the filter holder assembly/unit.

To brew the coffee, the filter holder assembly/unit is inserted into the cabinet filter holder housing located on the support base of the brewing head assembly/unit. Then the handle is rotated downward to the locked/closed position (see Figure 10). The cam pin will force down the connection plate. The connection plate and cam pin will make a clamp force on the filter holder assembly. The filter holder is sealed by a seal ring and with the clamp force created by the cam pin and the connection plate.

Figure 8 is the exploded view of the brewing head unit to show the components of the rotate to lock assembly, sealing assembly and the filter holder assembly of construction II.

As shown in Figure 8, the metal handle **10a** rotates upwards to unlock the brewing head unit. The handle is linked to cam pin **11a** and the connection plate **3a** by a screw. When the handle moves, the cam pin **11a** will rotate. The irregular shape of the cam pin will cause the connection plate **3a** to rise up because the connection plate **3a** is connected to the top frame **1** by the hinge pin **2a.** The connection plate will also cause the top frame **1** to rise up slightly. The inclination angle between the top frame **1** and the support base **14** is about 10 degrees. This angle is just enough for the filter holder assembly/unit to slide in and out of the brewing head unit. When the filter holder assembly/unit is inserted into the brewing head unit, the handle can be rotated downward to lock the filter holder assembly/unit.

The sealing assembly is composed of the top frame **1**, water connection plate **2,** seal ring **4,** water outlet valve **3,** water outlet spring **5,** water spreader **6** and the water outlet valve holder **7.** The water outlet valve holder **7** is the nut which holds the water spreader **6,** water outlet spring **5,** seal ring **4,** and water outlet valve **3** to the water connection plate **2.** The sealing assembly is fixed to the top frame **1** by a screw. Water outlet valve **3** and water outlet spring **5** is used to prevent water leakage from the water spreader under low pressure during the water heating stage. Hot water is released when the pump pressure is greater than the water outlet spring, which is around 5 Bar. When the hot water makes contact with the coffee, the pump pressure will increase to at least 10 to 20 bars. Then the coffee will flow out to the cup.

To brew coffee, the user needs to slide the filter holder assembly/unit into the brewing head assembly/unit. The filter holder assembly/unit is comprised of the metal filter **15,** filter handle **16,** filter holder **17** and the coffee chamber **18**. The coffee is placed on the filter, and then the filter is inserted into the filter holder. The coffee chamber **18** collects and releases the brewed coffee.

In another aspect of the invention, a motor is operatively linked to the front connection plate of construction I or cam pin of construction II. The said motor is used to rotate the linkage of the front connection plate of Construction I or the cam pin of construction II, thereby causing the metal handle to move upwards or downwards so that the locking mechanism on the brewing head assembly/unit will disengage/open or lock. A set of gears connect the cabinet filter holder unit and the motor so that the movement of the cabinet filter holder is made automatic without manual intervention. In an embodiment, a button is pressed to open the lock to allow the user to place the filter with coffee into the cabinet filter holder assembly/unit. The user then press a button to operate the motor used to slide in the cabinet and close the lock and/or the brewing head unit.

In another aspect of the invention, the motor can be operated by remote control.

## Claims

1. A brewing head unit of a coffee machine, comprising:
- a sliding filter holder assembly;
- a sealing assembly, comprising a water connection plate (2), water outlet valve (3), seal ring (4), water outlet spring (5), water spreader (6), and water outlet valve holder (7); and
- a rotate-to-lock assembly, operatively linked to sustain pressures of at least 20 bars.

2. The brewing head unit of claim 1, wherein the sliding filter holder assembly comprises a filter(15), filter handle (16), filter holder (17), and coffee chamber (18).

3. The brewing head unit of claims 1 or 2 , wherein the sliding filter holder assembly comprises a flange to provide linear sliding movement of the sliding filter holder assembly relative to the brewing head unit, wherein said linear sliding movement is driven by a motor and operated by a remote control.

4. The brewing head unit of any of claims 1 to 3, wherein the rotate-to-lock assembly comprises a top frame (1), back connection plate (8), front connection plate (9), fix pin (13), rotate rod (10), rotate plate (11), support base (14), and handle (12).

5. The brewing head unit according to any of claims 1 to 3, wherein the rotate-to-lock assembly comprises a top frame (1), connection plate (3a), cam pin (11a), hinge pin (2a), support base (14), and handle (10a).

6. The brewing head unit of any of claims 1 to 5, wherein
- the sliding filter holder assembly is part of a filter holder section adapted to receive a filter and a brewing chamber with exit openings;
- the brewing head unit further comprises a lower brewing head section fixedly attached to said machine comprising a recess or receptacle adapted to receive said filter holder section, and
- an upper brewing head section comprising a seal member, an inlet for hot fluid, and a spreader in communication with said inlet for distributing the hot fluid to said filter holder section or coffee/brewing chamber,
said upper brewing head section being pivotable relative to said lower brewing head part to a closed position in which said seal member form a pressure- and water-tight seal between said upper brewing head section and said filter holder section, and to an opened position to unlock the filter holder section from said lower brewing head section.

7. The brewing head unit of claim 6, wherein said filter holder section is inserted, mounted or placed vertically from above into the receptacle or recess of the lower brewing head section, or wherein said filter holder section is inserted or mounted horizontally from the side into the receptacle or recess of the lower brewing head section.

8. The brewing head unit of claims 6 or 7, wherein said upper brewing head section is pivotable relative to said lower brewing head section by an inclination angle of up to about 55° when in the open position, and wherein said seal member is capable of sustaining pressures of at least 20 bars when the upper brewing head section and the lower brewing head section are in the closed position.

9. The brewing head unit of any of claims 6 to 8, further comprising a lock for maintaining the water- and pressure-tight seal between said upper brewing head section and said filter holder section, or wherein said lower brewing head section comprises a housing opened at its front to form a cavity and said filter holder section comprises a cabinet adapted to receive a filter and a brewing chamber and a sliding unit provided at a movable junction of the housing and the cabinet for allowing a linear sliding movement of the cabinet relative to the housing, or wherein said sliding unit is motor-driven allowing automatic linear sliding movement of the said cabinet relative to the said housing, or wherein the motor-driven sliding unit is operated by remote control.

10. The brewing head unit of any of claims 1 to 9, further comprising a generator for producing hot liquid fluid, hot gaseous fluid, or pressurized hot fluid.

11. A pressurized coffee machine, comprising a brewing head unit of any of the claims 1 to 10, further comprising a generator, a boiler, or a heating system for producing hot fluid, wherein said generator, boiler, or heating system is connected to said brewing head unit by a hose.

## Patentansprüche

1. Brühkopfeinheit einer Kaffeemaschine, umfassend:
- eine gleitende Filterträgeranordnung,
- eine Dichtungsanordnung, die eine wasseranschlusaplatte (2), ein Wasserauslassventil (3), einen Dichtungsring (4), eine Wasserauslassfeder (5), einen Wasserverteiler (6) und einen Wasserauslassventilhalter (7) umfasst, und
- eine Drehverschlussanordnung, die betriebsbereit so angeschlossen ist, dass sie einen Druck von mindestens 20 bar halten kann.

2. Brühkopfeinheit nach Anspruch 1, wobei die gleitende Filterträgeranordnung einen Filter (15), einen Filtergriff (16), einen Filterträger (17) und eine Kaffeekammer (18) aufweist.

3. Brühkopfeinheit nach Anspruch 1 oder 2, wobei die gleitende Filterträgeranordnung einen Kragen umfasst, um eine in Bezug auf die Brühkopfeinheit lineare, gleitende Bewegung der gleitenden Filterträgeranordnung bereitzustellen, wobei die lineare gleitende Bewegung durch einen Motor angetrieben und durch eine Fernbedienung gesteuert wird.

4. Brühkopfeinheit nach einem der Ansprüche 1 bis 3, wobei die Drehverschlussanordnung eine obere Fassung (1), eine hintere Anschlussplatte (8), eine vordere Anschlussplatte (9), einen Befestigungsstift (13), einen Drehstab (10), eine Drehplatte (11), einen Tragboden (14) und einen Griff (12) umfasst.

5. Brühkopfeinheit nach einem der Ansprüche 1 bis 3, wobei die Drehverschlussanordnung eine obere Fassung (1), eine Anschlussplatte (3a), einen Nockenstift (11a), einen Scharnierstift (2a) einen Tragboden (14) und einen Griff (10a) umfasst.

6. Brühkopfeinheit nach einem der Ansprüche 1 bis 5, wobei
- die gleitende Filterträgeranordnung Teil eines Filterträgerabschnittes ist, der dafür eingerichtet ist, einen Filter und eine Brühkammer mit Ausgangsöffnungen aufzunehmen,
- die Brühkopfeinheit ferner einen unteren Brühkopfabschnitt umfasst, der fest an der Maschine angebracht ist und eine Vertiefung oder Aufnahme umfasst, die dafür eingerichtet ist, den Filterträgerabschnitt aufzunehmen, und
- ein oberer Brühkopfabschnitt ein Dichtungselement, einen Einlass für heißes Fluid und einen Verteiler umfasst, der mit dem Einlass verbunden ist, um das heiße Fluid zum Filterträgerabschnitt oder zur Kaffe-/Brühkammer hin zu verteilen,
der obere Brühkopfabschnitt in Bezug auf den unteren Brühkopfteil in eine geschlossene Stellung drehbar ist, in welcher das Dichtungselement eine druck- und wasserdichte Dichtung zwischen dem oberen Brühkopfabschnitt und dem Filterträgerabschnitt bildet, sowie in eine geöffnete Stellung, um den Filterträgerabschnitt vom unteren Brühkopfabschnitt zu entriegeln.

7. Brühkopfeinheit nach Anspruch 6, wobei der Filterträgerabschnitt vertikal von oben in die Aufnahme oder Vertiefung des unteren Brühkopfabschnittes eingesetzt, montiert oder angeordnet wird oder wobei der Filterträgerabschnitt horizontal von der Seite in die Aufnahme oder Vertiefung des unteren Brühkopfabschnittes eingesetzt oder montiert wird.

8. Brühkopfeinheit nach Anspruch 6 oder 7, wobei der obere Brühkopfabschnitt in Bezug auf den unteren Brühkopfabschnitt um einen Neigungswinkel von bis zu 55° drehbar ist, wenn er sich in der geöffneten Position befindet, und wobei das Dichtungselement in der Lage ist ist, einen Druck von mindestens 20 bar zu halten, wenn sich der untere Brühkopfabschnitt und der obere Brühkopfabschnitt in geschlossener Position befinden.

9. Brühkopfeinheit nach einem der Ansprüche 6 bis 8, ferner einen Verschluss zum Erhalt der wasser- und druckdichten Dichtung zwischen dem oberen Brühkopfabschnitt und dem Filterträgerabschnitt umfassend oder wobei der untere Brühkopfabschnitt ein Gehäuse umfasst, das an seiner Vorderseite geöffnet ist, um eine Aussparung zu bilden, und der Filterträgerabschnitt eine Kammer, die zum Aufnehmen eines Filters und einer Brühkammer eingerichtet ist, und eine Gleiteinheit umfasst, die an einer beweglichen Verbindung des Gehäuses und der Kammer bereitgestellt ist, um eine in Bezug auf das Gehäuse lineare Gleitbewegung der Kammer zu ermöglichen, oder wobei eine durch einen Motor angetriebene Gleiteinheit durch eine Fernbedienung gesteuert wird.

10. Brühkopfeinheit nach einem der Ansprüche 1 bis 9, ferner einen Generator zum Erzeugen von heißem flüssigen Fluid, heißem gasförmigen Fluid oder unter Druck stehendem heißen Fluid umfassend.

11. Unter Druck stehende Kaffeemaschine, eine Brühkopfeinheit nach einem der Ansprüche 1 bis 10 umfassend, die ferner einen Generator, einen Boiler oder ein Heizsystem zum Erzeugen von heißem Fluid umfasst, wobei der Generator, der Boiler oder das Heizsystem mit der Brühkopfeinheit durch einen Schlauch verbunden ist.

## Revendications

1. Unité de tête d'infusion d'une machine à café, comprenant les éléments suivants :
- un dispositif de porte-filtre coulissant ;
- un dispositif d'étanchéité, comprenant un plateau de raccordement d'eau (2), une soupape de sortie d'eau (3), une bague d'étanchéité (4), un ressort de sortie d'eau (5), un distributeur d'eau (6) et un support de soupape de sortie d'eau (7) ; et
- un ensemble de fermeture par rotation, opérationnellement adapté pour supporter des pressions d'au moins 20 bar.

2. Unité de tête d'infusion selon la revendication 1, dans laquelle l'ensemble de porte-filtre coulissant comprend un filtre (15), une poignée de filtre (16), un porte-filtre (17) et une chambre à café (18).

3. Unité de tête d'infusion selon l'une des revendications 1 ou 2, dans laquelle l'ensemble de porte-filtre coulissant comprend un rebord pour fournir un mouvement de coulissement linéaire de l'ensemble de porte-filtre coulissant par rapport à l'unité de tête d'infusion, et dans laquelle ledit mouvement de coulissement linéaire est entraîné par un moteur et opéré par une télécommande.

4. Unité de tête d'infusion selon l'une quelconque des revendications 1 à 3, dans laquelle l'ensemble de fermeture par rotation comprend un cadre du dessus (1), un plateau de raccordement arrière (8), un plateau de raccordement avant (9), une broche de fixation (13), une tige de rotation (10), un plateau de rotation (11), une base de support (14) et une poignée (12).

5. Unité de tête d'infusion selon l'une quelconque des revendications 1 à 3, dans laquelle l'ensemble de fermeture par rotation comprend un cadre du dessus (1), un plateau de raccordement (3a), une goupille de came (11a), un tourillon pivotant (2a), une base de support (14) et une poignée (10a).

6. Unité de tête d'infusion selon l'une quelconque des revendications 1 à 5, dans laquelle
- l'ensemble de porte-filtre coulissant fait partie d'une section de porte-filtre adaptée pour recevoir un filtre et une chambre d'infusion avec des ouvertures de sortie ;
- l'unité de tête d'infusion comprend en outre une section inférieure de tête d'infusion, qui est attachée fixement à ladite machine, comprenant une cavité ou un réceptacle adaptés pour recevoir ladite section de porte-filtre, et
- il est prévu une section supérieure de tête d'infusion, comprenant un élément d'étanchéité, une entrée pour liquide chaud et un distributeur communiquant avec ladite entrée, pour distribuer le liquide chaud à ladite section de porte-filtre ou chambre d'infusion / à café,
ladite section supérieure de tête d'infusion pouvant pivoter par rapport à ladite partie inférieure de tête d'infusion, vers une position fermée dans laquelle ledit élément d'étanchéité forme un joint étanche à l'eau et à la pression entre ladite section supérieure de tête d'infusion et ladite section de porte-filtre, et vers une position ouverte afin de déverrouiller la section de porte-filtre par rapport à ladite section inférieure de tête d'infusion.

7. Unité de tête d'infusion selon la revendication 6, dans laquelle ladite section de porte-filtre est insérée, montée ou placée verticalement par le haut dans le réceptacle ou la cavité de la section inférieure de tête d'infusion, ou dans laquelle ladite section de porte-filtre est insérée ou montée horizontalement par le côté dans le réceptacle ou la cavité de la section inférieure de tête d'infusion.

8. Unité de tête d'infusion selon les revendications 6 ou 7, dans laquelle la section supérieure de tête d'infusion peut pivoter par rapport à ladite section inférieure de tête d'infusion, selon un angle d'inclinaison allant jusqu'à 55° dans la position ouverte, et dans laquelle ledit élément d'étanchéité est capable de supporter des pressions d'au moins 20 bars lorsque la section supérieure de tête d'infusion et la section inférieure de tête d'infusion sont dans la position fermée.

9. Unité de tête d'infusion selon l'une quelconque des revendications 6 à 8, comprenant en outre un verrou pour maintenir le joint étanché à l'eau et à la pression entre ladite section supérieure de tête d'infusion et ladite section de porte-filtre, ou dans laquelle ladite section inférieure de tête d'infusion comprend un logement ouvert sur l'avant pour former une cavité et ladite section de porte-filtre comprend un compartiment adapté pour recevoir un filtre et une chambre d'infusion et une unité coulissante prévu au niveau d'une jonction mobile entre le logement et le compartiment, pour permettre un mouvement de coulissement linéaire du compartiment par rapport au logement, ou dans laquelle ladite unité coulissante est entraînée par un moteur permettant un mouvement de coulissement linéaire automatique dudit compartiment par rapport audit logement, ou dans laquelle l'unité coulissante entraînée par moteur fonctionne avec une télécommande.

10. Unité de tête d'infusion selon l'une quelconque des revendications 1 à 9, comprenant en outre un générateur pour produire un fluide liquide chaud, un fluide gazeux chaud ou un fluide chaud sous pression.

11. Machine à café sous pression, comprenant une unité de tête d'infusion selon l'une quelconque des revendications 1 à 10, comprenant en outre un générateur, une chaudière ou un système de chauffage pour produire un fluide chaud, dans laquelle ledit générateur, ladite chaudière ou ledit système de chauffage sont reliés à ladite unité de tête d'infusion par un tuyau.
